# EUROPÄISCHE PATENTSCHRIFT

(11) **EP 1 021 943 B1**
(45) Veröffentlichungstag und Bekanntmachung des Hinweises auf die Patenterteilung: **12.10.2005**
(21) Anmeldenummer: 00101127.9
(22) Anmeldetag: 21.01.2000
(51) Int. Cl.: A01C 15/00, A01M 7/00

(54) **Landwirtschaftliche Verteilmaschine**
Agricultural spreader
Epandeur agricole

(30) Priorität: 25.01.1999 DE 19902787; 25.01.1999 DE 19902788; 25.01.1999 DE 19902789; 25.01.1999 DE 19902790; 25.02.1999 DE 19908240; 26.02.1999 DE 19908695
(43) Veröffentlichungstag der Anmeldung: 26.07.2000
(73) Patentinhaber: Amazonen-Werke H. Dreyer GmbH & Co. KG, 49205 Hasbergen (DE)
(72) Erfinder: Dreyer, Heinz, Dr. Dipl.-Ing., 49205 Hasbergen (DE)

(56) Entgegenhaltungen:
- EP-A- 0 520 575
- FR-A- 2 662 904
- US-A- 2 596 390
- US-A- 5 335 856
- US-A- 5 755 382

## Beschreibung

Die Erfindung betrifft eine landwirtschaftliche Verteilmaschine gemäß des Oberbegriffes des Patentanspruches 1.

Durch die US-53 35 856 ist eine Maschine nach dem Oberbegriff des Anspruches 1 bekannt. Bei derartigen Verteilmaschinen liegt aufgrund der relativ hochbauenden Aufbauten, wie Vorratstanks, Vorratsbehälter, etc. die ein entsprechend großes Aufnahmevolumen zur Erreichung großer Flächenleistungen aufweisen müssen, der Schwerpunkt relativ hoch. Hierdurch besteht insbesondere am Hang und bei Kurvenfahrten die Gefahr, daß die Anhängegeräte umkippen können. Desweiteren kann der von den Laufrädern herrührende Bodendruck in manchen Fällen zu hoch sein.

Der Erfindung liegt die Aufgabe zugrunde, eine Verteilmaschine zu schaffen, bei welchem der Gesamtschwerpunkt für die Transportfahrt relativ tief liegen kann.

Diese Aufgabe wird erfindungsgemäß durch die kennzeichnenden Merkmale des Anspruches 1 gelöst. Infolge dieser Maßnahme kann der Rahmen mit den Aufbauten, wie Vorratstanks, Vorratsbehälter etc. für die Transportfahrt abgesenkt werden. Hierdruch wird eine niedrige Lage des Gesamtschwerpunktes erreicht. Für die Ausbringarbeit auf dem Feld wird der Rahmen mit den Aufbauten angehoben, um eine ausreichende Bodenfreiheit zu erreichen. Eine besonders vorteilhafte Ausbildung des Fahrwerkes läßt sich in einer bevorzugten Ausführungform dadurch erreichen, daß das Fahrwerk als Tandemfahrwerk ausgebildet ist. Infolge dieser Maßnahme wird die Grundvoraussetzung für ein relativ niedrig bauendes Fahrwerk geschaffen. Hierdurch können die Aufbauten relativ niedrig angeordnet werden, so daß der Gesamtschwerpunkt der Verteilmaschine niedrig liegt. Hierbei ist in einer Ausführungsform vorgesehen, daß jedes Laufrad mit einer Schwinge über ein Gelenk am Rahmen angelenkt ist. Durch den Hydraulikzylinder ist eine einfache und leichte Verstellung der Spurweite zu erreichen. Somit ergibt sich eine vorteilhafte Anordnung und Verstellung der Schwingen zur Einstellung der Spurweite.

Um einerseits bei der Bestellarbeit eine genügend große Bodenfreiheit, insbesondere wenn die Verteilmaschine in hoch aufgewachsenen Kulturen eingesetzt wird, zu erreichen, und um andererseits für die Straßen- bzw. Transportfahrt einen möglichst tiefliegenden Gesamtschwerpunkt zu erreichen, ist erfindungsgemäß vorgesehen, daß auf jeder Seite zwei Laufräder des Tandemfahrwerkes vorgesehen sind, daß jedes Laufwerk mit einer Schwinge über ein Gelenk am Rahmen in aufrechter Ebene bewegbar angelenkt ist. Hierdurch wird die Voraussetzung dafür geschaffen, daß mittels eines zwischen jeder Schwinge und dem Rahmen wirkenden Hydraulikzylinders die Lage der Laufräder zu dem Rahmen bzw. zu dem Tank je nach Einsatzverhältnissen eingestellt werden kann. So kann beispielsweise während der Arbeit durch Absenken der Laufräder gegenüber dem Rahmen der Rahmen mit den Aufbauelementen, wie beispielsweise Tank angehoben werden, so daß sich für die Bestellarbeit eine große Bodenfreiheit ergibt. Andererseits kann für die Transportfahrt der Rahmen mit den Aufbauelementen durch die Relativverstellung der Schwingen mit den Laufrädern gegenüber dem Rahmen abgesenkt werden, so daß sich eine vorteilhafte niedrige Gesamtschwerpunktlage der Feldspritze ergibt.

In einer weiteren Ausführungsform ist vorgesehen, daß zwischen dem Rahmen und jeder Aufhängung der Laufräder zumindest ein Hydraulikzylinder angeordnet ist. Hierdurch läßt sich eine einfache Verstellung der Laufräder gegenüber dem Rahmen verwirklichen. Somit können die vorgeschilderten Vorteile einfach erreicht werden.

Um ein schonendes Absenken bzw. eine schonende Festlegung der Endverstellung der Schwinge zu erreichen, ist vorgesehen, daß zwischen jeder Schwinge und dem Rahmen ein vorzugsweise federnd ausgebildeter Anschlag vorgesehen ist. Dieses wirkt sich bei abgesenkten Rahmen während der Straßenfahrt vorteilhaft aus.

Um die Spurweite der Laufräder der Verteilmaschine an verschiedene Kulturen und Einsatzverhältnisse anpassen zu können, ist vorgesehen, daß die Schwingen derart am Rahmen gelagert sind, daß zur Verstellung der Spurweite der Laufräder des Fahrwerkes die Schwingen quer zur Fahrtrichtung verschiebbar und in unterschiedliche Positionen arretierbar angeordnet sind.

Um ein vorteilhaftes Federungsverhalten des Fahrwerks zu erreichen, ist vorgesehen, daß in den zu den Hydraulikzylinder führenden Leitungen zumindest eine Gasblase angeordnet ist.

Desweiteren ist vorgesehen, daß jedem Hydraulikzylinder ein Absperrelement, beispielsweise ein Absperrventil oder ein Absperrhahn zugeordnet ist. Infolge dieser Maßnahmen kann dann jedes Laufrad in einer vorgesehenen Position arretiert werden. Desweiteren ist es möglich, durch eine entsprechende Stellung der Absperrelemente das gewünschte Laufrad im Verhältnis zu den anderen, ohne diese zu mitverschwenken, zu verstellen.

Desweiteren ist bei einer als Anhängegerät ausgebildeten und eine Deichsel aufweisenden Verteilmaschine vorgesehen, daß die Deichsel als Knickdeichsel ausgebildet ist, wobei zwischen der Deichsel und dem Rahmen ein Hydraulikzylinder angeordnet ist. Hierdurch kann die Höhenlage des Anlenkpunktes der Deichsel gegenüber dem Rahmen eingestellt werden. Hierdurch läßt sich die Höhenlage und Stellung der Deichsel zum Rahmen verändern, dieses ist beispielsweise für eine Bergauf- oder Bergabfahrt vorteilhaft, weil hierdurch beispielsweise der Rahmen in eine horizontale Lage eingestellt werden kann. Auch ist es möglich, durch Verstellen der Knickdeichsel den Rahmen mit dem Tank in eine optimale Position zu bringen, damit möglichst geringe Restmengen im Tank

verbleiben.

Um eine möglichst tiefen Schwerpunktlage zu erreichen, ist vorgesehen, daß der Vorratstank derart ausgebildet ist, daß er sich in seitlicher Ausdehnung oberhalb der Laufräder befindet. Auch kann vorteilhaft sein, wenn der Vorratsbehälter einen trapezförmigen Querschnitt aufweist, wobei sich der schmale Bereich im unteren Bereich befindet.

Eine vorteilhafte Weiterbildung des Fahrwerkes wird dadurch erreicht, daß zumindest einige der Laufräder lenkbar am Rahmen angeordnet sind.

Insbesondere beim Einsatz der Verteilmaschine auf Grünlandflächen kann vorteilhaft sein, daß die vorderen und/oder hinteren Laufräder mit unterschiedlichen Spurweiten zueinander einstellbar sind.

Bei einer Fahrt am Hang kann es sinnvoll sein, um die Kippgefahr zu verhindern, daß das Rad und/oder die Räder auf der einen Seite der Maschine unabhängig von dem Rad und/oder den Rädern auf der anderen Seite der Maschine angehoben und/oder abgesenkt werden können. Hierdurch ist es möglich, eine horizontale Lage des Rahmens quer zur Fahrtrichtung einzustellen.

Als vorteilhaft hat sich herausgestellt, wenn die Laufräder um etwa 30-60 cm aus der untersten in die oberste Stellung und umgekehrt, vorzugsweise stufenlos, verstellbar sind.

Eine vorteilhafte Auslegung der Hydraulikanlage zum Verstellen der Schwingen der Laufräder ergibt sich dadurch, daß die Hydraulikzylinder, die den einzelnen Laufrädern zugeordnet sind, mittels geeigneter Mittel derart einstellbar und/oder belastbar sind, daß die vorderen und/oder hinteren Räder ganz oder teilweise hochgezogen oder heruntergedrückt werden, so daß die Gewichtsbalance zwischen den hinteren und den vorderen Laufrädern entsprechend den Einsatzverhältnissen einstellbar ist.

Insbesondere für die Fahrt am Hang ist vorteilhaft, daß die Laufräder auf jeder Seite getrennt mittels geeigneter Mittel in ihrer Höhenlage zueinander und/oder gegenüber dem Rahmen getrennt und unterschiedlich einstellbar sind.

Weitere Einzelheiten der Erfindung sind den übrigen Unteransprüchen, der Beispielsbeschreibung und den Zeichnungen zu entnehmen. Hierbei zeigen
- Fig.1: ein als landwirtschaftliche Anhängefeldspritze ausgebildete Verteilmaschine in Seitenansicht und in Prinzipdarstellung und in Arbeitsstellung,
- Fig.2: die Verteilmaschine in Seitenansicht, in Transportstellung und in Prinzipdarstellung,
- Fig.3: eine andere Betriebsweise der Verteilmaschine in Prinzipdarstellung,
- Fig.4: das Tandemfahrwerk der Verteilmaschine in vergrößertem Maßstab, in Seitenansicht und in Prinzipdarstellung,
- Fig.5: das Fahrwerk der Verteilmaschine in der Ansicht von hinten und in Prinzipdarstellung,
- Fig.6: eine weitere Verteilmaschine in Seitenansicht, in Betriebsstellung und in Prinzipdarstellung,
- Fig.7: die Verteilmaschine gemäß Fig.6 in Transportstellung, in Seitenansicht und in Prinzipdarstellung,
- Fig. 8: eine weitere als Feldspritze ausgebildete Verteilmaschine in Seitenansicht, in Betriebsstellung und inTransportstellung,
- Fig. 9: das Verteilmaschine gemäß Fig. 8 in Betriebstellung,
- Fig.10: ein weiteres Tandemfahrwerk einer Verteilmaschine in Seitenansicht und in Prinzipdarstellung und
- Fig. 11: die Aufhängung eines der Laufräder des Tandemfahrwerkes gemäß Fig. 10 im vergrößertem Maßstab und in Teilansicht.
- Fig.12: das Tandemfahrwerk gemäß Fig.10 in Rückansicht.
- Fig.13: eine als landwirtschaftlicher Selbstfahrer ausgebildete Verteilmaschine, in Seitenansicht und in Prinzipdarstellung und in Arbeitsstellung,
- Fig.14: die Verteilmaschine in Seitenansicht, in Transportstellung und in Prinzipdarstellung,
- Fig.15: eine andere Betriebsweise der Verteilmaschine in Seitenansicht und in Prinzipdarstellung,
- Fig.16: ein weiterer landwirtschaftlicher Selbstfahrer in Seitenansicht, in Prinzip- darstellung und in Arbeitsstellung,
- Fig.17: die Verteilmaschine gemäß Fig.16 in Transportstellung und in Prinzipdarstellung,
- Fig.18: eine weitere Verteilmaschine in Seitenansicht und in Prinzipdarstellung,
- Fig.19: die Verteilmaschine in der Ansicht von hinten und
- Fig.20: die Aufhängung eines der Laufräder des Fahrwerkes in vergrößertem Maßstab, in Teilansicht und in Seitenansicht.

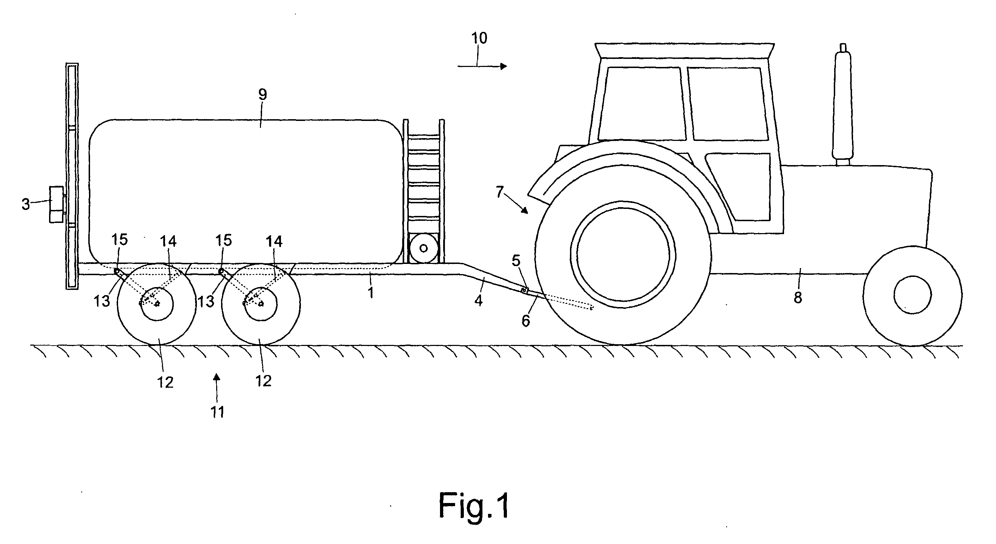

Die als gezogene landwirtschaftliche Feldspritze ausgebildete Verteilmaschine gemäß Fig. 1 weist den Rahmen 1 auf. Auf der Vorderseite dieses Rahmens 1 ist die Zugdeichsel 2 angeordnet, während an der Rückseite des Rahmens 1 das Verteilergestänge 3 sich befindet. Die Zugdeichsel 2 ist mit ihrem vorderen Ende 4 über eine Kuppeleinrichtung 5 an die Unterlenker 6 des Dreipunktkrafthebers 7 des Ackerschleppers 8 angekuppelt. Auf dem Rahmen 1 ist der Vorratstank 9 angeordnet. Der Vorratstank 9 weist, im Ausführungsbeispiel, in Fahrtrichtung 10 gesehen einen trapezähnlichen Querschnitt auf, wobei die schmalere Seite sich im unteren Bereich befindet. Die Breite des Vorratstanks 9 beträgt im oberen Bereich etwa 2,50 m.

Die Feldspritze ist mit einem sogenannten Tandemfahrwerk 11 ausgestattet. Jedes Laufrad 12 des Tandemfahrwerks 11 ist mittels einer Schwinge 13 über ein Gelenk 14 am Rahmen 1 in aufrechter Ebene angeordnet. Die Schwingen 13 sind über die Gelenke 14 mittels einer Schiebeführung 15 an dem Rahmen 1 befestigt.

Zwischen jeder Schwinge 13 und dem Rahmen 1 ist ein Hydraulikzylinder 14 angeordnet. Desweiteren ist zwischen jeder Schwinge 13 und dem Rahmen 1 ein nicht dargestellter federnd ausgebildeter Anschlag vorgesehen, an welchen die Schwingen 13 in ihrer hochgezogenen Position zur Anlage kommen.

Die Hydraulikzylinder 14 sind an die Hydraulikanlage des Schleppers oder an eine bordeigene Hydraulikanlage der Feldspritze angeschlossen. In den zu dem Hydraulikzylinder 14 führenden Leitungen sind nicht dargestellte Gasblasen angeordnet. Somit wird quasi ein integriertes Federsystem erreicht. Desweiteren sind jedem Hydraulikzylinder 14 ein nicht dargestelltes Absperrelement, beispielsweise ein Absperrventil oder ein Absperrhahn zugeordnet.

Die Schiebeführung 15, mit welcher die Laufräder 12 am Rahmen 1 angeordnet sind, weisen das als Vierkantrohr 16 ausgebildete Außenführungselement der Schiebeführung 15 auf. In diesem Vierkantrohr 16 ist ein weiteres Vierkantrohr 17 als Innenführungselement verschiebbar geführt, an dessen Außenseite mittels des Gelenkes 14 die Schwinge 13 angelenkt ist. Über diese ineinander verschiebbaren Elemente 16 und 17 kann die Spurweite der Laufräder 12 des Tandemfahrwerkes 10 eingestellt werden. Um diese Einstellung zu vereinfachen, kann der Schiebeführung 15 ein nicht dargestellter Hydraulikzylinder zugeordnet sein, mittels welchem die beiden Teile 16 und 17 zueinander verstellt werden können. Somit ist die Spurweite in einfacher Weise, beispielsweise vom Schleppersitz, einstellbar.

Die den Hydraulikzylindern 14 bzw. den Hydraulikleitungen zugeordneten Absperrelementen können von Hand oder über Fernbetätigungseinrichtungen vom Schleppersitz aus eingestellt werden. Hierdurch sind verschiedene Einstellungen der Schwingen 13 mit den Laufrädern 12 zueinander möglich. Auch kann auf diese Weise ein einfacher Radwechsel der Laufräder durchgeführt werden. Hierzu müssen lediglich die Absperrelemente jeweils in die entsprechende Position gebracht werden, so daß das zu wechselnde Rad ausgehoben wird. In gleicher Weise ist eine einfache Spurweiteneinstellung möglich. Es ist also ein "Wagenheber" in das Tandemfahrwerk integriert.

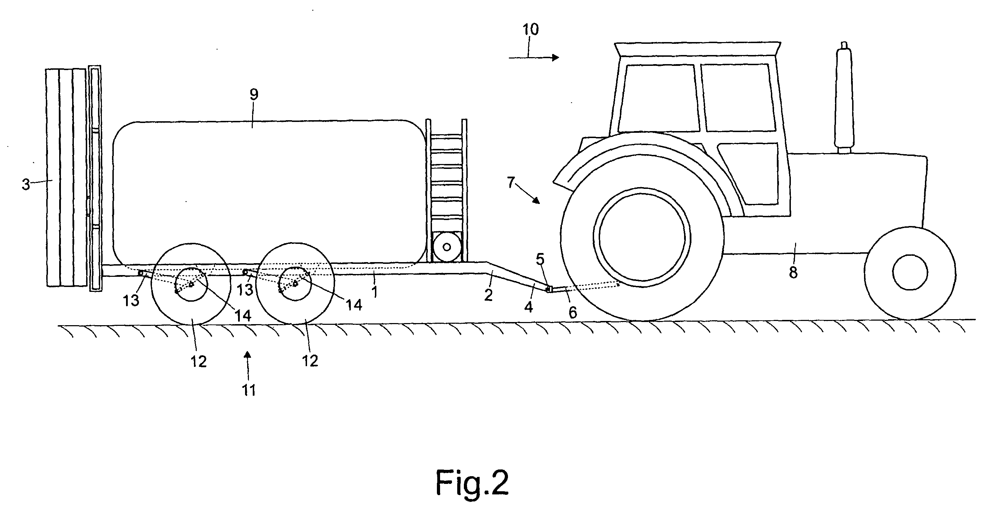

Wenn die Feldspritze auf dem Acker eingesetzt wird, insbesondere in aufgewachsenen Kulturen, werden die Schwingen 13 mit den Laufrädern 12 über die Hydraulikzylinder 14 in die in Fig.1 dargestellte Stellung gebracht. Über die Unterlenker 6 des Dreipunktkrafthebers 7 wird die Deichsel 2 entsprechend in der Höhenlage eingestellt, so daß sich eine horizontale Lage, wie in Fig.1 dargestellt, die parallel zur Bodenoberfläche ist, einstellen läßt. Um eine gute Straßenlage mit relativ niedriger Schwerpunktlage der Feldspritze zu erreichen, wird die Feldspritze gemäß Fig.2 eingestellt. Hierbei ist, wie einfach feststellbar ist, der Rahmen 1 durch das Hochschwenken der Laufräder 12 mit den Schwingen 13 über die Hydraulikzylinder 14 abgesenkt, so daß sich eine möglichst niedrige Gesamtschwerpunktlage für die Feldspritze ergibt. Ebenfalls werden die Unterlenker 6 des Dreipunktkrafthebers 7 des Schleppers 8 abgesenkt, so daß auch der vordere Bereich der Feldspritze abgesenkt wird. Weiterhin ist das Verteilergestänge 3, welches auf der Rückseite der Feldspritze angeordnet ist, in eingeklappter Stellung zu bringen. Aufgrund dieses Absenkens der Feldspritze ergibt sich somit eine vorteilhaft niedrige Schwerpunktlage. Durch die niedrige Schwerpunktlage gemäß Fig. 1 wird die Kippgefahr erheblich verringert. Darüberhinaus ist die Sicht über die Feldspritze nach hinten hinweg gut, welches im Straßenverkehr wichtig ist.

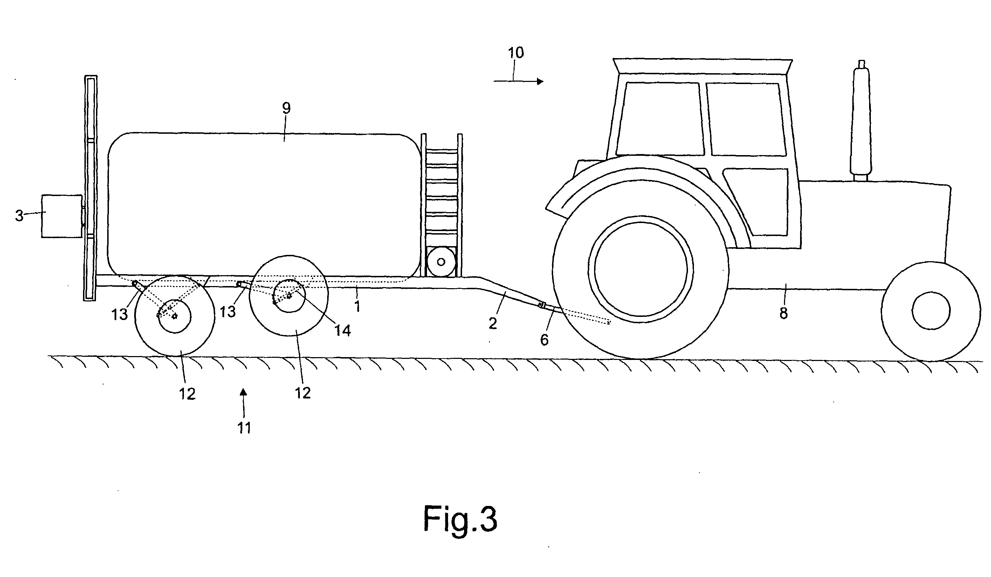

Die Fig.3 zeigt eine weitere Betriebsweise der als Feldspritze ausgebildeten Verteilmaschine. Zum Wenden am Feldende werden nur die vorderen Laufräder 12 des Tandemfahrwerkes 11 angehoben, so daß ein besseres Wendeverhalten erzielbar ist.

Desweiteren ist es möglich, um die Spurweite einzustellen, durch entsprechende Stellung der Absperrelemente, in gezielter Weise das jeweilige Laufrad 12 anzuheben, um dieses quer zur Fahrtrichtung 10 in die erforderliche Stellung zu bringen, so daß die gewünschte Spurweite einstellbar ist. Auf Grünlandflächen kann die Feldspritze beispielsweise mit dem abgesenkten Fahrwerk 11 gemäß Fig.2 eingesetzt werden.

Eine Verstellung bzw. ein Anheben und Absenken des Fahrwerkes 11 ist zwischen 30 und 60 cm möglich.

Es ist auch möglich, unterschiedliche Räder vorzusehen, welches bei verschiedenen Einsatzfällen vorteilhaft sein kann. So kann beispielsweise das vordere Laufrad 12 eine größeren Durchmesser als das hintere Laufrad aufweisen. Hierbei können relativ große Räder 12 vorgesehen sein, damit beim Anheben einige der Laufräder 12 des Tandemfahrwerkes 11 die Tragfunktion übernehmen können, ohne zu tief in den Boden einzusinken.

Durch die Anordnung der Absperrelemente in den zu den Hydraulikzylindern 14, die den Schwingen 13 zugeordnet sind, ist es möglich, nur einige der Hydraulikzylinder 14 zu betätigen. So können beispielsweise die Räder 12 auf der einen Seite unabhängig von den Rädern 12 auf der anderen Seite angehoben oder abgesenkt werden. Dieses ist beispielsweise bei der Fahrt quer zum Hang vorteilhaft, da hierdurch nur die Räder 12 auf der einen Seite verstellt werden, um so eine horizontale Lage oder zumindest annähernd horizontale Lage der Feldspritze zu erreichen. Hierdurch ergibt sich auch bei der Fahrt quer zum Hang ein mittig liegender Schwerpunkt, somit ist die Kippgefahr bei Fahrt quer zum Hang erheblich reduziert. Desweiteren ist es bei hangauf- oder hangabwärts führender Fahrt möglich, die Feldspritze in eine horizontale Lage durch Anheben und Absenken der Unterlenker des Dreipunktkrafthebers zu bringen. Hierbei sind dann die vorderen und hinteren Laufräder derart zueinander einstellbar, daß beide Räder etwa die gleiche Bodenpressung aufweisen. Hierbei können die Hydraulikzylinder 14, die den einzelnen Laufrädern 12 zugeordnet sind, mittels geeigneter Mittel derart einstellbar oder belastbar sein, daß die vorderen und/oder hinteren Räder 12 ganz oder teilweise hochgezogen oder heruntergedrückt werden, so daß die Gewichtsbalance zwischen den hinteren und den vorderen Laufrädern 12 entsprechend den Einsatzverhältnissen eingestellt werden kann.

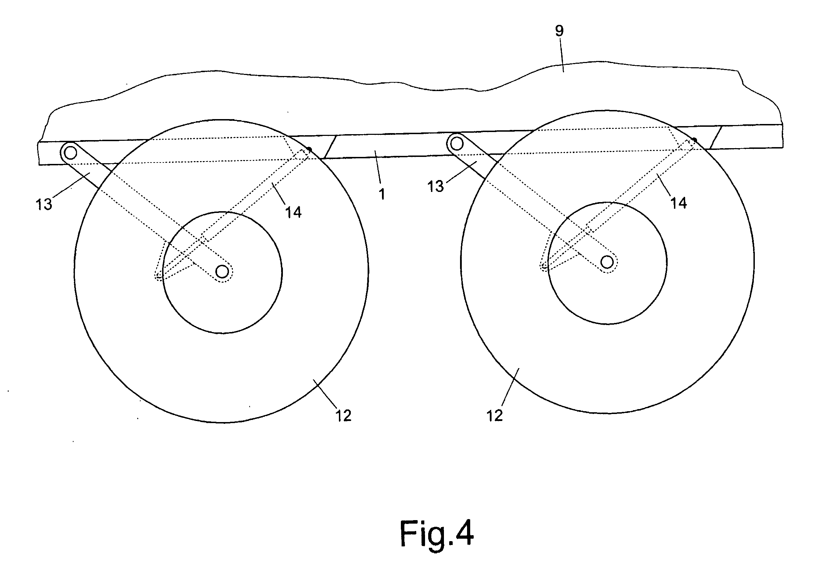

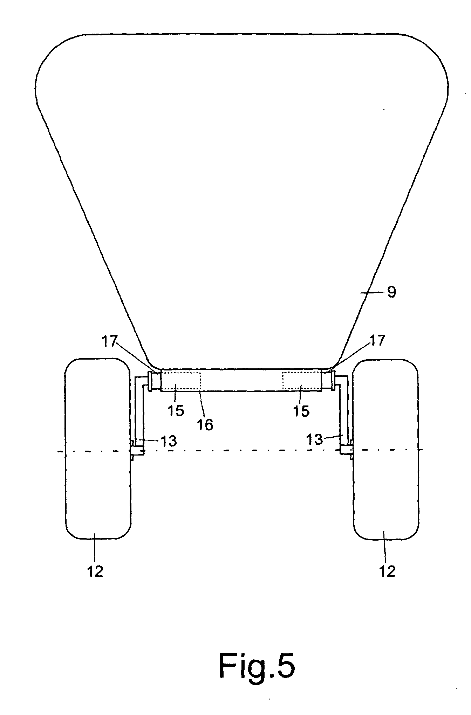

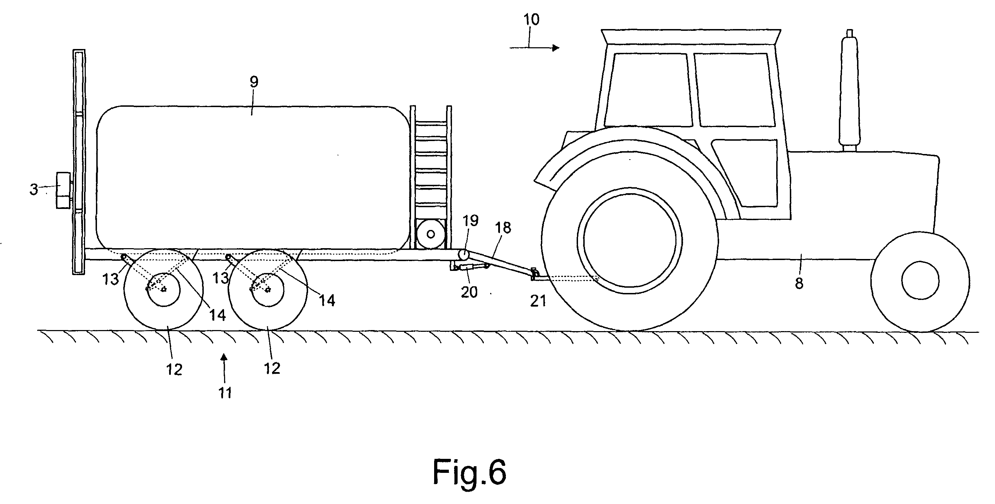

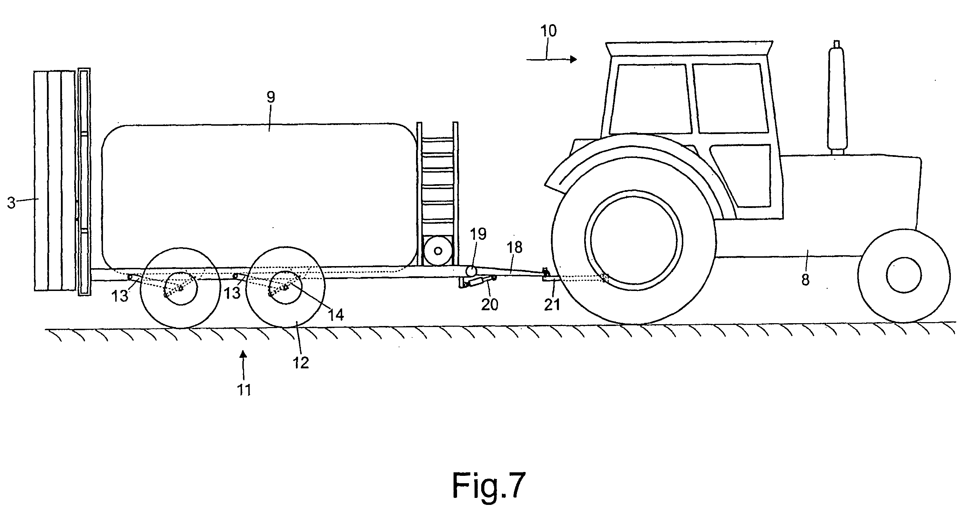

Die Feldspritze gemäß Fig.6 und 7 unterscheidet sich von der Feldspritze von den Fig.1 bis 5 dadurch, daß auf der Vorderseite des Rahmens 1 die Knickdeichsel 18 angeordnet ist. Die Knickdeichsel 18 ist mittels eines Gelenkes 19 an dem Rahmen 1 in aufrechter Ebene bewegbar angeordnet. Zwischen der Knickdeichsel 18 und dem Rahmen 1 ist ein Hyraulikzylinder 20 einstellbar, in welcher die Position der Knickdeichsel 18 zum Rahmen 1 eingestellt werden kann. Eine Feldspritze mit einer Knickdeichsel 18 wird insbesondere dann eingesetzt, wenn die Deichsel 18 nicht über eine Kuppeleinrichtung an die Unterlenker des Dreipunktkrafthebers angekuppelt ist, sondern an dem Zugpendel oder dem Zugmaul des Ackerschleppers angehängt wird. Über die Knickdeichsel 21 kann dann die Höhenlage des vorderen Bereiches der Feldspritze eingestellt werden, welches bei dem Ausführungsbeispiel gemäß den Fig. 1 bis 5 durch die Höheneinstellung der Unterlenker 6 des Dreipunktkrafthebers 7 geschieht.

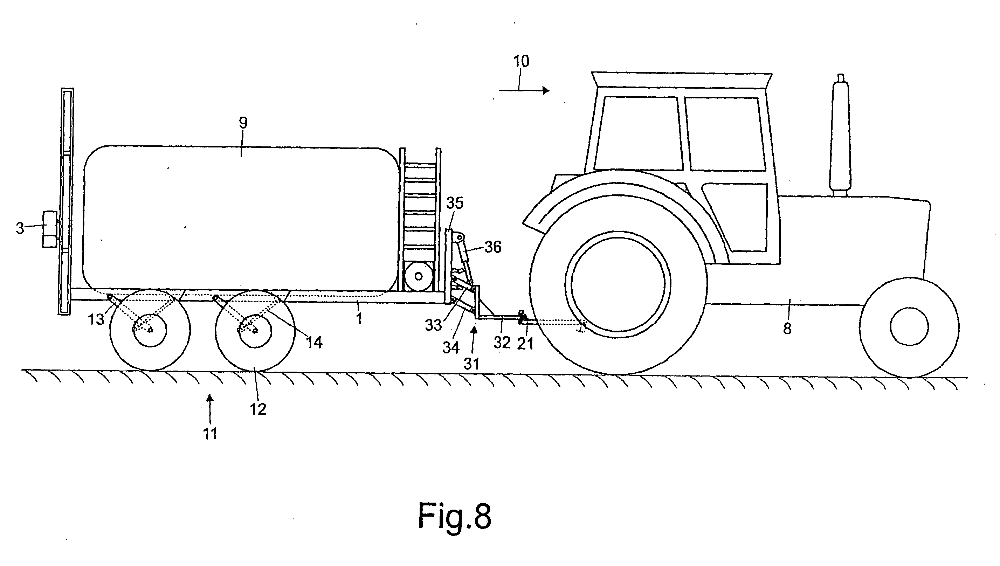

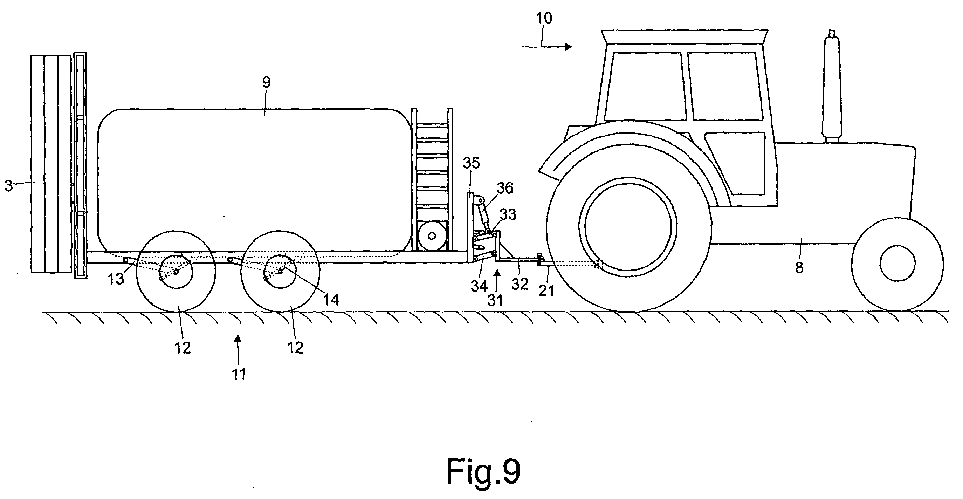

Die als Feldspritze ausgebildete Verteilmaschine gemäß Fig. 8 und 9 unterscheidet sich von der Verteilmaschine gemäß Fig. 6 und 7 durch eine andere Ausbildung der auf der Vorderseite des Rahmens 1 angeordneten Knickdeichsel 31. Diese Bauart der Knickdeichsel 31 weist das heb- und senkbare Deichselelement 32 auf, welches mittels der Parallelogrammlenker 33 und 34 an dem Säulenelement 35 an dem Rahmen 1 angelenkt ist. Einem der Parallelogrammlenker ist der Hydraulikzylinder 36 zum Anheben und Absenken des Deichselelementes 32 gegenüber dem Rahmen 1 zugeordnet.

Die Funktionsweise der Knickdeichsel 31 entspricht der Knickdeichsel 21 gemäß Fig. 6 und 7, so daß die Feldspritze gemäß Fig. 8 und 9 in die Transportposition gemäß Fig. 8 und die Betriebsposition gemäß Fig. 9 sowie Zwischenpositionen gebracht werden kann.

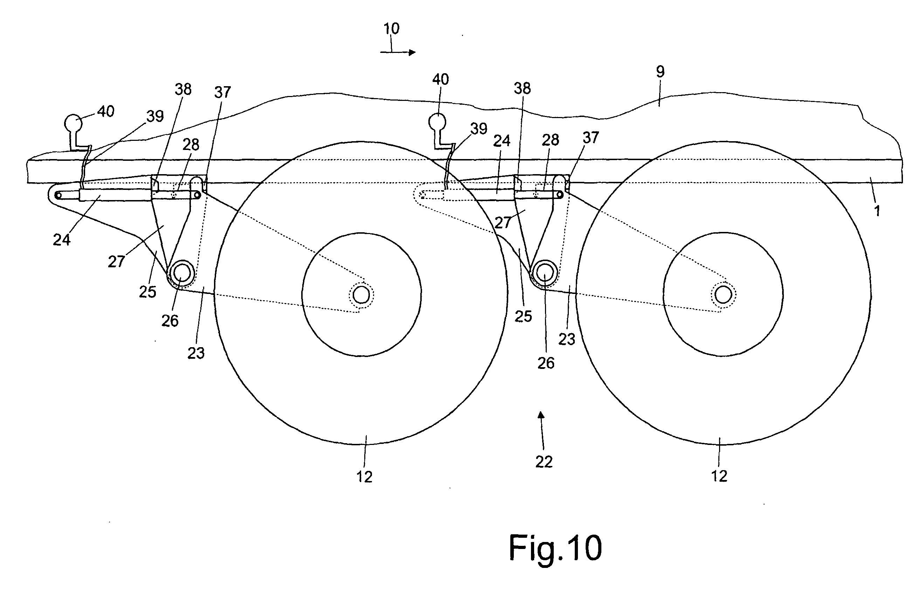

Die Fig.10 bis 12 zeigen eine weitere Ausbildung eines Tandemfahrwerkes 22 der als Feldspritze ausgebildeten Verteilmaschine. Die Schwinge 23 und der Hydraulikzylinder 24, der der Schwinge 23 zugeordnet ist, sind an einem gemeinsamen Bauelement 25 angeordnet und gemeinsam quer zur Fahrtrichtung 10 verschiebbar, um unterschiedliche Spurweiten der Laufräder 12 einzustellen. Die Schwinge 23 ist über das Gelenk 26 an der Strebe 27 des Bauteiles 25 angelenkt. Diese Strebe 27 ist an einem Vierkantrohr 28, welches ein Innenführungselement einer Schiebeführung 29 bildet, befestigt. Dieses innere Führungselement 28 der Schiebeführung 29 ist in einem als Vierkantrohr 30 ausgebildeten Außenführungselement der Schiebeführung 29 quer zur Fahrtrichtung 10 verschiebbar angeordnet. Das Außenführungselement 30 ist an dem Rahmen 1 der Feldspritze befestigt. Die Strebe 27 ist nach vorne verlängert, so daß an dem vorderen Ende dieses Verlängerungselementes der Strebe 27 der Hydraulikzylinder 24, der an die Schwinge 23 angreift, angelenktn ist. Auch den Hydraulikzylindern 24 sind jeweils nicht dargestellte Absperrelemente, wie Absperrhähne oder Ventilelemente zugeordnet. Diese Absperrelemente können hand- oder fernbetätigt sein, so daß über die Hydraulikanlage des Ackerschleppers oder eine bordeigene Hydraulikanlage der Feldspritze die Hydraulikzylinder 24 getrennt oder gemeinsam betätigt werden können. Aufgrund dieser Absperrelemente ist die Hydraulikanlage derart ausgebildet, daß die den einzelnen Laufrädern 12 zugeordneten Hydraulikzylinder 24 zum Anheben und Absenken der Schwingen 23 derart betätigbar sind, daß die vorderen und/oder hinteren der Laufräder 12 gegenüber den jeweils anderen Laufrädern 12 eine andere oder gleiche Position einnehmen können. Es ist natürlich auch möglich, die Laufräder 12 gemeinsam zu verschwenken, um so die Feldspritze in die entsprechende Position zu bringen, d.h. daß sie gegenüber dem Rahmen 1 angehoben werden kann, um den Gesamtschwerpunkt für die Transportfahrt abzusenken oder die Laufräder mit den Schwingen 23 gegenüber dem Rahmen 1 nach unten verstellt werden, so daß die Feldspritze zum Einsatz insbesondere in höher aufgewachsenen Kulturen angehoben wird, um eine ausreichende Bodenfreiheit zu erreichen, wie dieses bzgl. den Fig. 1 bis 7 beschrieben ist.

Desweiteren sind die Hydraulikzylinder 24 mittels geeigneter Mittel derart einstellbar und/oder belastbar, so daß die vorderen und/oder hinteren Räder 12 ganz oder teilweise hochgezogen oder heruntergedrückt werden können, so daß die Gewichtsbalance zwischen den hinteren und den vorderen Laufrädern 12 entsprechend den Einsatzverhältnissen einstellbar ist.

Den Schwingen 23 sind die die eine Endposition bestimmenden Anschläge 37 und die andere Endposition bestimmende und als Gummipuffer ausgebildete federnden Anschläge 38 zugeordnet, welche die Endlage der Schwingen 23 bestimmen. Weiterhin sind in den zu den Hydraulikzylindern 24 führenden Leitungen 39 als Gasblasen 40 ausgebildete Ausgleich- und Federelemente angeordnet. In der Betriebsposition stützt sich die Strebe 23 über das Strebenelement 23' an dem federnden Anschlag 38 ab, während in der Betriebsposition die Gasblasen 40 jeweils als Federelement dienen.

Die Laufräder 12 auf jeder Seite sind mittels geeigneter Mittel in ihrer Höhenlage zueinander und/oder gegenüber dem Rahmen 1 getrennt und unterschiedlich einstellbar, so daß bei den unterschiedlichsten Einsatz- und Geländeverhältnissen immer die optimale Position der Feldspritze einstellbar ist.

Zwischen den Innenführungselementen 28 und dem Außenführungselement 30 der Schiebeführung kann jeweils ein nicht dargestellter Hydraulikzylinder angeordnet sein. Mittels dieses Hydraulikzylinders läßt sich die Spurweite der Laufräder 12 leicht und einfach einstellen. Hierbei können die der Schiebeführung zugeordneten Hydraulikzylinder mit den Hydraulikzylindern, welche den Schwingen zugeordnet sind, derart schalttechnisch verbunden sein, daß beim Absenken des Rahmens 1 der Feldspritze die Spurweite verringert und beim Anheben des Rahmens 1 der Feldspritze die Spurweite vergrößert wird.

Die Achsstummel zur Anordnung der Laufräder 12 an den Schwingen sind als genormte Achsstummel ausgebildet, um so einen leichten Austausch zu gewährleisten.

Desweiteren können die Laufräder 12 lenkbar am Rahmen 1 angeordnet sein. Außerdem ist es möglich, die hinteren Laufräder 12 als Pendellaufräder anzuordnen, um so insbesondere bei Kurvenfahrt automatisch einen optimalen Nachlauf der Räder 12 zu gewährleisten.

Das Absenken des Rahmens 1 durch das Verschwenken der Schwingen mit den Laufrädern 12 kann auch dann benutzt werden, wenn Wechselaufbauten auf dem Rahmen 1 anordbar sind, die verschiedenen Aufbausystem leicht gegenüber auswechseln zu können. Nach dem Entriegeln der Aufbausystemelemente vom Rahmen, kann der Rahmen abgesenkt werden und die Aufbausystemelemente werden auf an ihnen angebrachte Abstellelemente abgestellt. Nach dem Absenken des Rahmens kann der Rahmen 1 mit Fahrwerk 1 und Deichsel 2 weggefahren werden. In umgekehrter Reihenfolge lassen sich in einfacher Weise andere Aufbausystemelemente auf dem Rahmen anordnen.

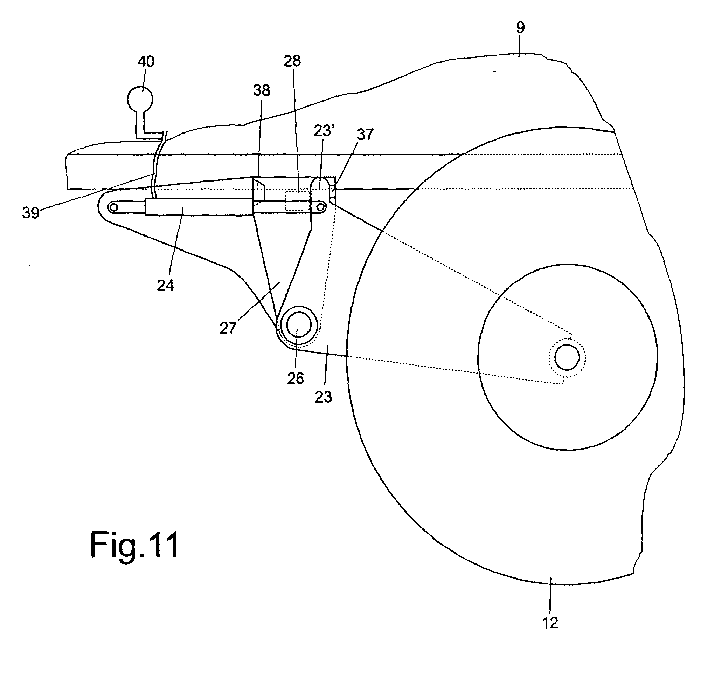

Die als Selbstfahrer ausgebildete Verteilmaschine gemäß Fig.11 ist als Feldspritze ausgebildet. Der Selbstfahrer weist den Rahmen 40 auf, der sich über das hintere Tandemfahrwerk 41 und das vordere Lenkfahrwerk 42 auf dem Boden abstützt. Im vorderen Bereich des Rahmens 40 ist die Fahrerkabine 43 angeordnet.

Der Selbstfahrer ist mit einem sogenannten Tandemfahrwerk 41 ausgestattet. Der Antrieb der Achsen des Tandemfahrwerkes 41 ist nicht dargestellt. Die Achsen werden über einen herkömmlichen und bekannten Antriebsstrang von einem Antriebsmotor angetrieben.

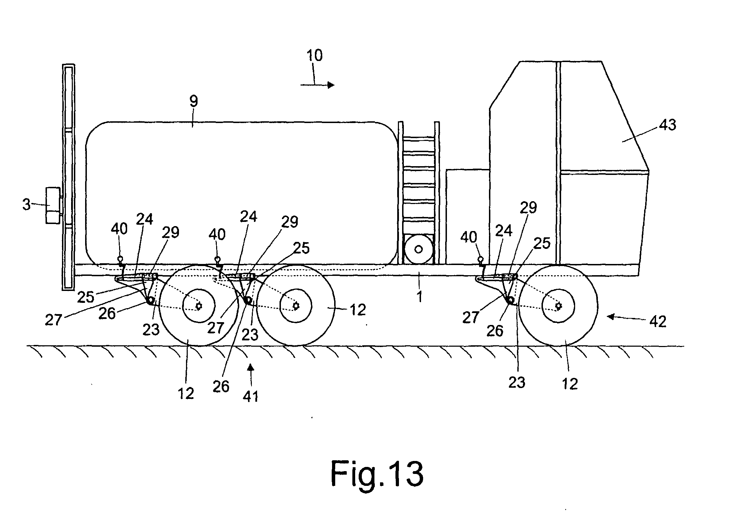

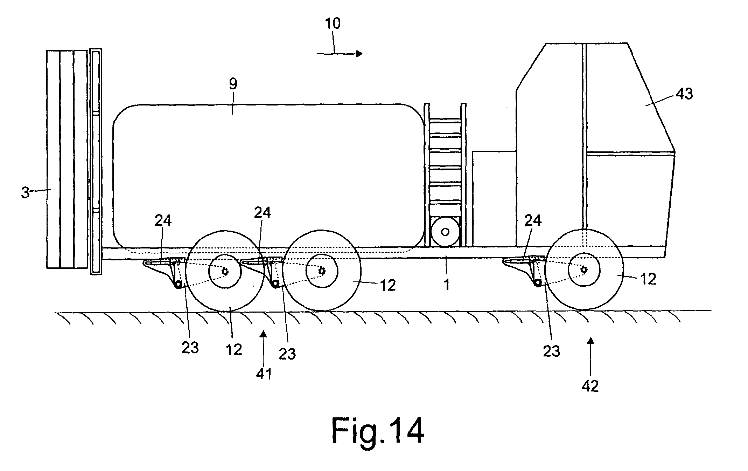

Die Schwinge 23 und der Hydraulikzylinder 24, der der Schwinge 23 zugeordnet ist, sind an einem gemeinsamen Bauelement 25 angeordnet und gemeinsam quer zur Fahrtrichtung 10 verschiebbar, um unterschiedliche Spurweiten der Laufräder 12 einzustellen. Die Schwinge 23 ist über das Gelenk 26 an der Strebe 27 des Bauteiles 25 angelenkt. Diese Strebe 27 ist an einem Vierkantrohr 28, welches ein Innenführungselement einer Schiebeführung 29 bildet, befestigt. Dieses innere Führungselement der Schiebeführung 29 ist in einem als Vierkantrohr ausgebildeten Außenführungselement der Schiebeführung 29 quer zur Fahrtrichtung 10 verschiebbar angeordnet. Das Außenführungselement ist an dem Rahmen 1 der Feldspritze befestigt. Die Strebe 27 ist nach vorne verlängert, so daß an dem vorderen Ende dieses Verlängerungselementes der Strebe 27 der Hydraulikzylinder 24, der an die Schwinge 23 angreift, angelenktn ist. Auch den Hydraulikzylindern 24 sind jeweils nicht dargestellte Absperrelemente, wie Absperrhähne oder Ventilelemente zugeordnet. Diese Absperrelemente können hand- oder fernbetätigt sein, so daß über die Hydraulikanlage des Ackerschleppers oder eine bordeigene Hydraulikanlage der Feldspritze die Hydraulikzylinder 24 getrennt oder gemeinsam betätigt werden können. Aufgrund dieser Absperrelemente ist die Hydraulikanlage derart ausgebildet, daß die den einzelnen Laufrädern 12 zugeordneten Hydraulikzylinder 24 zum Anheben und Absenken der Schwingen 23 derart betätigbar sind, daß die vorderen und/oder hinteren der Laufräder 12 gegenüber den jeweils anderen Laufrädern 12 eine andere oder gleiche Position einnehmen können. Es ist natürlich auch möglich, die Laufräder 12 gemeinsam zu verschwenken, um so die Feldspritze in die entsprechende Position zu bringen, d.h. daß sie gegenüber dem Rahmen 40 angehoben werden kann, um den Gesamtschwerpunkt für die Transportfahrt abzusenken, wie in Fig.14 dargestellt ist, oder die Laufräder 12 mit den Schwingen 23 gegenüber dem Rahmen 40 nach unten verstellt werden, so daß die Feldspritze zum Einsatz insbesondere in höher aufgewachsenen Kulturen angehoben wird, um eine ausreichende Bodenfreiheit, wie in Fig.13 dargestellt ist, zu erreichen, wie dieses bzgl. den Fig. 1 bis 12 beschrieben ist.

Desweiteren sind die Hydraulikzylinder 24 mittels geeigneter Mittel derart einstellbar und/oder belastbar, so daß die vorderen und/oder hinteren Räder 12 ganz oder teilweise hochgezogen oder heruntergedrückt werden können, so daß die Gewichtsbalance zwischen den hinteren und den vorderen Laufrädern 12 entsprechend den Einsatzverhältnissen einstellbar ist.

Den Schwingen 23 sind nicht dargestellte federnde Anschläge zugeordnet, welche die Endlage der Schwingen 23 bestimmen. Weiterhin sind in den Hydraulikzylindern 24 führender Leitungen als Gasblase 40 ausgebildete Ausgleich- und Federelemente angeordnet.

Die Laufräder 12 auf jeder Seite sind mittels geeigneter Mittel in ihrer Höhenlage zueinander und/oder gegenüber dem Rahmen 1 getrennt und unterschiedlich einstellbar, so daß bei den unterschiedlichsten Einsatz- und Geländeverhältnissen immer die optimale Position der Feldspritze einstellbar ist.

Zwischen den Innenführungselementen und dem Außenführungselement der Schiebeführung 29 kann jeweils ein nicht dargestellter Hydraulikzylinder angeordnet sein. Mittels dieses Hydraulikzylinders läßt sich die Spurweite der Laufräder 12 leicht und einfach einstellen. Hierbei können die der Schiebeführung zugeordneten Hydraulikzylinder mit den Hydraulikzylindern, welche den Schwingen zugeordnet sind, derart schalttechnisch verbunden sein, daß beim Absenken des Rahmens 1 der Feldspritze die Spurweite verringert und beim Anheben des Rahmens 1 der Feldspritze die Spurweite vergrößert wird.

Das Absenken des Rahmens 40 durch das Verschwenken der Schwingen mit den Laufrädern 12 kann auch dann benutzt werden, wenn Wechselaufbauten auf dem Rahmen 40 anordbar sind, die verschiedenen Aufbausystem leicht gegenüber auswechseln zu können. Nach dem Entriegeln der Aufbausystemelemente vom Rahmen, kann der Rahmen abgesenkt werden und die Aufbausystemelemente werden auf an ihnen angebrachte Abstellelemente abgestellt. Nach dem Absenken des Rahmens kann der Rahmen 40 mit Fahrwerk 41 und 42. In umgekehrter Reihenfolge lassen sich in einfacher Weise andere Aufbausystemelemente auf dem Rahmen 40 anordnen.

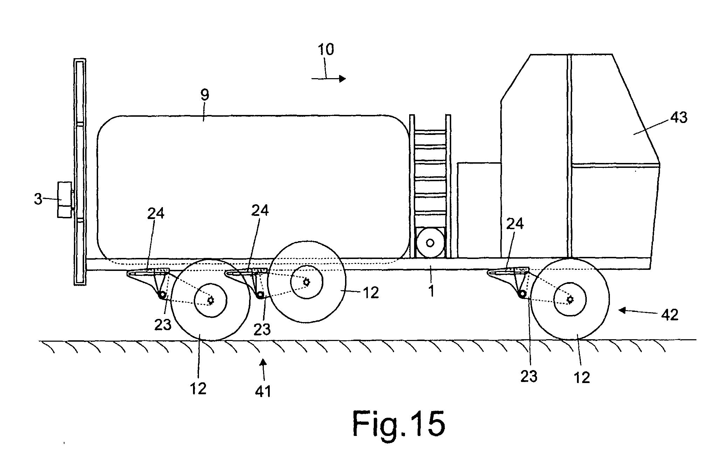

Bei der Arbeitsweise gemäß Fig.15 ist das vordere Tandemlaufrad angehoben. Dieses wird bevorzugt zum Wenden am Feldende oder bei dem Transport auf der Straße gemacht, wenn der Vorratstank 9 leer ist.

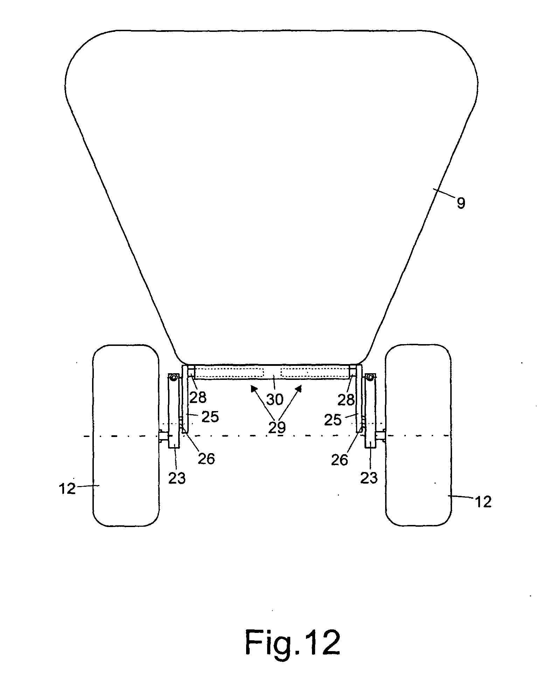

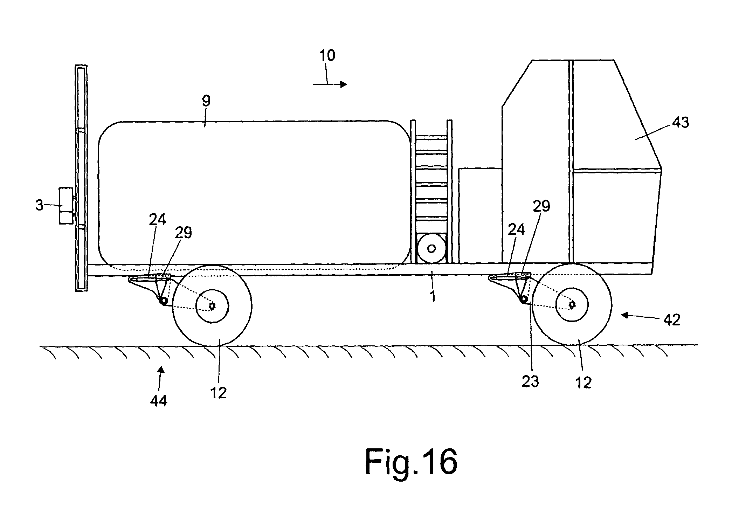

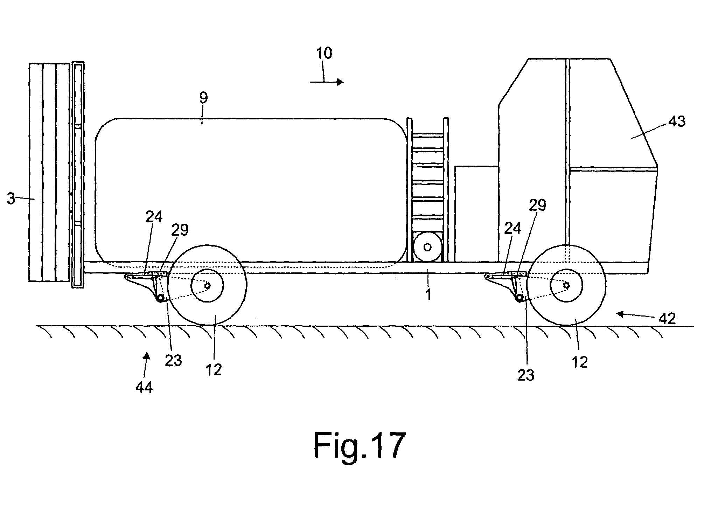

Das Ausführungsbeispiel gemäß Fig.16 und 17 unterscheidet sich von dem Ausführungsbeispiel gemäß Fig.12 bis 15 dadurch, daß das hintere Fahrwerk 44 nicht als Tandemfahrwerk 41 sondern als Einzelradfahrwerk 44 ausgebildet ist. Die Aufhängung der Schwingen 23 am Rahmen 40 entspricht der Aufhängung der Schwingen 23 gemäß den Fig.12 bis 15.

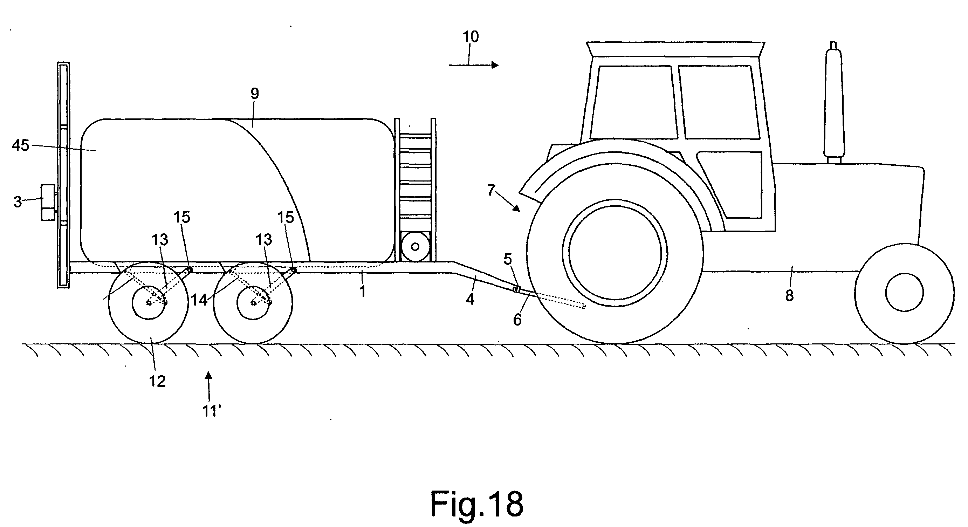

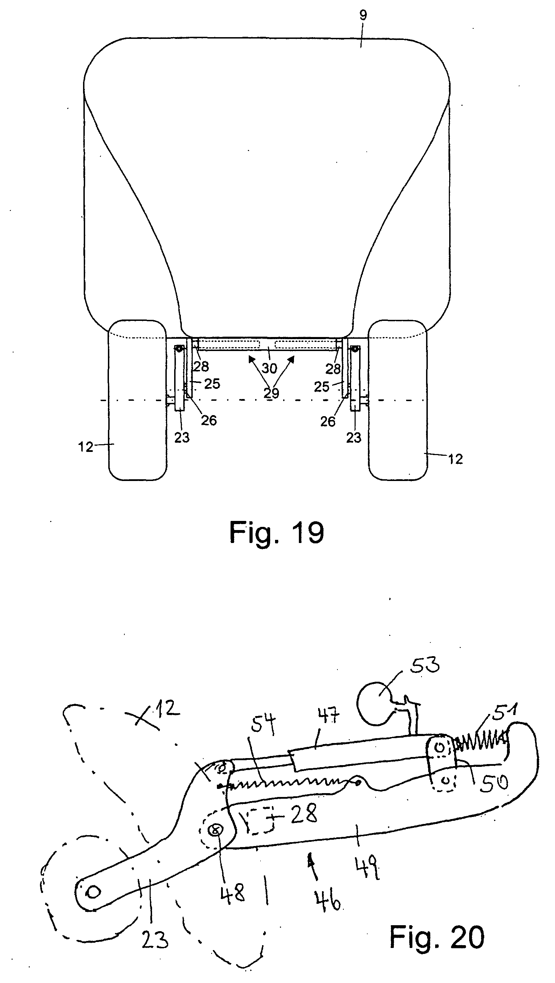

Die Verteilmaschine gemäß Fig.18 unterscheidet sich von der Verteilmaschine gemäß Fig.1 durch die andere Anlenkung der Schwingen 13 und der Hydraulikzylinder 15. Im Gegensatz zu Fig.1 sind bei diesem Ausführungsbeispiel die Schwingen 13 vorne angelenkt, also ziehend angeordnet, während sie bei Fig. 1 im rückwärtigen Bereich, also schiebend angeordnet sind. Desweiteren ist der Vorratsbehälter 9 im hinteren Bereich 45 eingezogen, wie Fig.20 zeigt, während er im vorderen Bereich auch im unteren Bereich quasi genauso breit ausgebildet ist, wie im oberen Bereich.

Die Fig.19 zeigt einen Vorratsbehälter, der im hinteren unteren Bereich 45, wie anhand der Fig.18 erläutert, zum Eischwenken der Laufräder nach oben eingezogen ist, während er im vorderen unteren Bereich quasi genauso breit wie im oberen Bereich ausgebildet ist.

Die Fig.20 zeigt die Anordnung einer Schwinge 23 an einem verstellbaren gemeinsamen Bauelement 46. Die Schwinge 23 des Fahrwerkes und der Hydraulikzylinder 47, der der Schwinge 23 zugeordnet ist, sind an einem gemeinsamen Bauteil 46 angeordnet und gemeinsam quer zur Fahrtrichtung 10 verschiebbar, um unterschiedliche Spurweiten der Laufräder 12 einstellen zu können. Die Schwinge 23 ist über das Gelenk 48 an der Strebe 49 des Bauteiles 46 angelenkt. Diese Strebe 49 ist an einem Vierkantrohr 28, welches ein Innenführungselement einer Schiebeführung bildet, befestigt. Dieses innere Führungselement 28 der Schiebeführung ist in einem als Vierkantrohr ausgebildeten Außenführungselement, welches am Rahmen befestigt ist, der Schiebeführung quer zur Fahrtrichtung verschiebbar angeordnet. Die Strebe 49 ist nach vorne verlängert. An dem rückwärtigen Ende der Strebe 49 ist die Schwinge 23 mittels des Gelenkes 48 angeordnet. Im vorderen Bereich der Strebe 49 ist der Schwenkhebel 50 angeordnet, an welchem der Hydraulikzylinder 47 angreift, der mit dem einen Ende der Schwinge 23, an dem das Laufrad 12 befestigt ist, angreift. Der Schwenkhebel 50 stützt sich über die Feder 51 an der Strebe 49 ab. Desweiteren ist der Hydraulikleitung 52, die zu dem Hydraulikzylinder 47 führt, eine Gasblase 53 angeordnet. Desweiteren ist zwischen dem Ende der Strebe 49, an dem der Hydraulikzylinder 47 angreift, und der Schwinge 23 die Zugfeder 54 angeodnet, die die Schwinge 23 nach oben gegen den einfachwirkenden Hydraulikzylinder 47 zieht.

Über die Gasblase 53 und die Feder 51 wird eine hydromechanische Federung des Fahrwerkes erreicht.

## Patentansprüche

1. Landwirtschaftliche Verteilmaschine, wie beispielsweise Feldspritze, Großflächendüngerstreuer etc. mit einem Laufräder (12) aufweisenden Fahrwerk (11), einem Rahmen (1), auf dem Aufbauelemente, wie beispielsweise zumindest ein Vorratstank (9) angeordnet ist und einer Verteileinrichtung (3), wobei jedes Laufrad (12) mit einer Schwinge (13, 23) über ein Gelenk (15, 26) am Rahmen (1) in aufrechter Ebene bewegbar angelenkt ist, **dadurch gekennzeichnet, daß** jede Schwinge (23) gemeinsam mit dem Hydraulikzylinder (24) an einem gemeinsamen Bauelement (27) angeordnet ist, daß das Bauelement (27) gegenüber dem Rahmen (1) quer zur Fahrtrichtung (10) verschiebbar mittels einer Schiebeführung (30) am Rahmen (1) angeordnet ist, daß der Schiebeführung (30) ein Stellelement, beispielsweise ein Hydraulikzylinder, zur Verstellung der Spurweite zugeordnet ist.

2. Verteilmaschine nach einem oder mehreren der vorstehenden Ansprüche, **dadurch gekennzeichnet, daß** das Fahrwerk als Tandemfahrwerk (11) ausgebildet ist, daß auf jeder Seite zwei Laufräder (12) des Tandemfahrwerkes (11, 22) vorgesehen sind.

3. Verteilmaschine nach einem oder mehreren der vorstehenden Ansprüche, **dadurch gekennzeichnet, daß** zwischen dem Rahmen (1) und jeder Aufhängung der Laufräder (12) zumindest ein Hydraulikzylinder (14, 24) angeordnet ist.

4. Verteilmaschine nach einem oder mehreren der vorstehenden Ansprüche, **dadurch gekennzeichnet, daß** jeweils ein zwischen jeder als Schwinge (13, 23) ausgebildeten Aufhängung und dem Rahmen (1) wirkender Hydraulikzylinder (14, 24) vorgesehen ist.

5. Verteilmaschine nach einem oder mehreren der vorstehenden Ansprüche, **dadurch gekennzeichnet, daß** zwischen jeder Schwinge (13, 23) und dem Rahmen (1), ein vorzugsweise federnd ausgebildeter Anschlag vorgesehen ist.

6. Verteilmaschine nach einem oder mehreren der vorstehenden Ansprüche, **dadurch gekennzeichnet, daß** die Schwingen (13, 23) derart am Rahmen (1) gelagert sind, daß zur Verstellung der Spurweite der Laufräder (12) des Fahrwerkes (11, 22) die Schwingen (13, 23) quer zur Fahrtrichtung (10) verschiebbar und in unterschiedliche Positionen arretierbar sind.

7. Verteilmaschine nach einem oder mehreren der vorstehenden Ansprüche, **dadurch gekennzeichnet, daß** in den zu den Hydraulikzylinder (14, 24) führenden Leitungen zumindest eine Gasblase (40) angeordnet ist.

8. Verteilmaschine nach einem oder mehreren der vorstehenden Ansprüche, **dadurch gekennzeichnet, daß** jedem Hydraulikzylinder (14, 24) ein Absperrelement, beispielsweise ein Absperrventil oder Absperrhahn zugeordnet ist.

9. Verteilmaschine nach einem oder mehreren der vorstehenden Ansprüche, wobei auf der Vorderseite des Rahmens eine Deichsel angeordnet ist, **dadurch gekennzeichnet, daß** die Deichsel als Knickdeichsel (18, 31) ausgebildet ist, wobei zwischen der Deichsel (18, 31) und dem Rahmen (1) ein Hydraulikzylinder (20, 36) angeordnet ist.

10. Verteilmaschine nach einem oder mehreren der vorstehenden Ansprüche, **dadurch gekennzeichnet, daß** der Vorratstank (9) derart ausgebildet ist, daß er sich in seitlicher Ausdehnung oberhalb des Bereiches der Laufräder (12) befindet.

11. Verteilmaschine nach einem oder mehreren der vorstehenden Ansprüche, **dadurch gekennzeichnet, daß** die den einzelnen Laufrädern (12) zugeordneten Hydraulikzylinder (14, 24) zum Anheben und Absenken der Schwinge (13, 23) derart betätigbar sind, daß die vorderen und/oder hinteren der Laufräder (12) gegenüber den jeweils anderen Laufrädern (12) eine andere oder gleiche Position einnehmen können.

12. Verteilmaschine nach einem oder mehreren der vorstehenden Ansprüche, **dadurch gekennzeichnet, daß** bei Kurvenfahrt oder beim Wenden am Feldende die vorderen Laufräder (12) gegenüber den hinteren Laufrädern (12) anheben oder die hinteren Laufräder (12) gegenüber den vorderen Laufrädern (12) absenkbar sind.

13. Verteilmaschine nach einem oder mehreren der vorstehenden Ansprüche, **dadurch gekennzeichnet, daß** die Hydraulikzylinder (14, 24), die den einzelnen Laufrädern (12) zugeordnet sind, mittels geeigneter Mittel derart eingestellbar und/oder belastbar sind, daß die vorderen und/oder hinteren Räder (12) ganz oder teilweise hochgezogen oder heruntergedrückt werden, so daß die Gewichtsbalance zwischen den hinteren und den vorderen Laufrädern (12) entsprechend den Einsatzverhältnissen einstellbar ist.

14. Verteilmaschine nach einem oder mehreren der vorstehenden Ansprüche, **dadurch gekennzeichnet, daß** die Laufräder (12) auf jeder Seite mittels geeigneter Mittel in ihrer Höhenlage zueinander und/oder gegenüber dem Rahmen (1) getrennt und unterschiedlich einstellbar sind.

15. Verteilmaschine nach einem oder mehreren der vorstehenden Ansprüche, **dadurch gekennzeichnet, daß** zumindest einige der Laufräder (12) lenkbar am Rahmen (1) angeordnet sind.

16. Verteilmaschine nach einem oder mehreren der vorstehenden Ansprüche, **dadurch gekennzeichnet, daß** die vorderen und/oder hinteren Laufräder (12) mit unterschiedlichen Spurweiten zueinander einstellbar sind.

17. Verteilmaschine nach einem oder mehreren der vorstehenden Ansprüche, **dadurch gekennzeichnet, daß** das Rad (12) auf der einen Seite der Maschine unabhängig von dem Rad (12) auf der anderen Seite der Maschine anhebbar und/oder absenkbar ist.

18. Verteilmaschine nach einem oder mehreren der vorstehenden Ansprüche, **dadurch gekennzeichnet, daß** die Räder (12) auf der einen Seite unabhängig von den Rädern (12) auf der anderen Seite angehoben und/oder abgesenkt werden können.

## Claims

1. Agricultural distributor, such as, for example, an agricultural spraying machine, large area fertilizer spreader etc., said distributor including a framework (11) which includes running wheels (12), a frame (1) on which structural members, such as, for example, at least one storage tank (9) is disposed, and a distributing device (3), wherein each running wheel (12) is pivotally mounted on the frame (1) with a rocker arm (13, 23) via a pivot joint (15, 26) so as to be displaceable in an upright plane, **characterised in that** each rocker arm (23) is disposed on a common structural member (27) together with the hydraulic cylinder (24), **in that** the structural member (27) is disposed on the frame (1) by means of a sliding guide means (30) so as to be displaceable relative to the frame (1) transversely relative to the direction of travelling (10), **in that** an adjusting member, for example a hydraulic cylinder, is associated with the sliding guide means (30) for adjusting the lane width.

2. Distributor according to one or more of the preceding claims, **characterised in that** the framework is in the form of a tandem framework (11), **in that** two running wheels (12) of the tandem framework (11, 22) are provided on each side.

3. Distributor according to one or more of the preceding claims, **characterised in that** at least one hydraulic cylinder (14, 24) is disposed between the frame (1) and each suspending means of the running wheels (12).

4. Distributor according to one or more of the preceding claims, **characterised in that** a hydraulic cylinder (14, 24) is provided respectively working between each suspending means, which is in the form of a rocker arm (13, 23).

5. Distributor according to one or more of the preceding claims, **characterised in that** a stop member, preferably a resilient stop member, is provided between each rocker arm (13, 23) and the frame (1).

6. Distributor according to one or more of the preceding claims, **characterised in that** the rocker arms (13, 23) are mounted on the frame (1) in such a manner that, to adjust the lane width of the running wheels (12) of the framework (11, 22), the rocker arms (13, 23) are displaceable transversely relative to the direction of travel (10) and are lockable into various positions.

7. Distributor according to one or more of the preceding claims, **characterised in that** at least one gas blower (40) is disposed in the lines leading to the hydraulic cylinder (14, 24).

8. Distributor according to one or more of the preceding claims, **characterised in that** a shut-off member, for example a shut-off valve or stop valve, is associated with each hydraulic cylinder (14, 24).

9. Distributor according to one or more of the preceding claims, wherein a shaft is disposed at the front of the frame, **characterised in that** the shaft is in the form of an articulated shaft (18, 31), wherein a hydraulic cylinder (20, 36) is disposed between the shaft (18, 31) and the frame (1).

10. Distributor according to one or more of the preceding claims, **characterised in that** the storage tank (9) is configured in such a manner that the said storage tank is situated in lateral extension above the region of the running wheels (12).

11. Distributor according to one or more of the preceding claims, **characterised in that** the hydraulic cylinders (14, 24) associated with the individual running wheels (12) are actuatable in such a manner for raising and lowering the rockers arms (13, 23) that the front and/or rear running wheels (12) can assume a different or identical position relative to the other respective running wheels (12).

12. Distributor according to one or more of the preceding claims, **characterised in that** when travelling round bends or when turning at the end of the field, the front running wheels (12) are raised relative to the rear running wheels (12) or the rear running wheels (12) are lowerable relative to the front running wheels (12).

13. Distributor according to one or more of the preceding claims, **characterised in that** the hydraulic cylinders (14, 24), which are associated with the individual running wheels (12), are adjustable and/or can be acted upon in such a manner by means of suitable means that the front and/or rear wheels (12) are pulled up or pushed down completely or partially such that the weight balance between the rear and the front running wheels (12) is adjustable in accordance with the conditions of use.

14. Distributor according to one or more of the preceding claims, **characterised in that** the height of the running wheels (12) on each side is adjustable separately and variously relative to one another and/or relative to the frame (1) by means of suitable means.

15. Distributor according to one or more of the preceding claims, **characterised in that** at least some of the running wheels (12) are disposed so as to be controllable on the frame (1).

16. Distributor according to one or more of the preceding claims, **characterised in that** the front and/or rear running wheels (12) are adjustable one relative another with various lane widths.

17. Distributor according to one or more of the preceding claims, **characterised in that** the wheel (12) on the one side of the distributor is raisable and/or lowerable independently of the wheel (12) on the other side of the distributor.

18. Distributor according to one or more of the preceding claims, **characterised in that** the wheels (12) on the one side can be raised and/or lowered independently of the wheels (12) on the other side.

## Revendications

1. Epandeur agricole tel que pulvérisateur agricole, épandeur d'engrais pour grandes surfaces ou autres, comportant un châssis (11) muni de roues de sustentation (12), un cadre (1) portant des équipements comme par exemple un réservoir (9) et une installation d'épandage (3), chaque roue de sustentation (12) étant montée de manière articulée par l'intermédiaire d'un bras (13, 23) et d'une articulation (15, 26) au cadre (1), de façon mobile dans un plan montant,
**caractérisé en ce que**
chaque bras (23) et son vérin hydraulique (24) sont montés sur un élément commun (27),
cet élément (27) pouvant coulisser transversalement à la direction de déplacement (10) par rapport au cadre (1) par l'intermédiaire d'un moyen de guidage en coulissement (30) prévu sur le cadre (1),
le moyen de guidage en coulissement (30) comportant un actionneur tel qu'un vérin hydraulique pour régler la largeur de voie.

2. Epandeur selon la revendication 1,
**caractérisé en ce que**
le châssis est un châssis tandem (11) et de chaque côté se trouvent a deux roues de sustentation (12) du châssis tandem (11, 22).

3. Epandeur selon une ou plusieurs des revendications précédentes,
**caractérisé par**
au moins un vérin hydraulique (14, 24) entre le cadre (1) et chaque suspension des roues de sustentation (12).

4. Epandeur selon une ou plusieurs des revendications précédentes,
**caractérisé par**
un vérin hydraulique (14, 24) prévu entre chaque suspension formée par un bras (13, 23) et le cadre (1).

5. Epandeur selon une ou plusieurs des revendications précédentes,
**caractérisé par**
une butée notamment élastique entre chaque bras (13, 23) et le cadre (1).

6. Epandeur selon une ou plusieurs des revendications précédentes,
**caractérisé en ce que**
les bras (13, 23) sont montés sur le cadre (1) pour que les bras (13, 23) puissent coulisser transversalement à la direction de déplacement (10) afin de régler la largeur de voie des roues de sustentation (12) du châssis (11, 22) et ils peuvent se bloquer dans des positions différentes.

7. Epandeur selon une ou plusieurs des revendications précédentes,
**caractérisé en ce que**
les conduites reliées aux vérins hydrauliques (14, 24) comportent au moins un ballon à gaz (40).

8. Epandeur selon une ou plusieurs des revendications précédentes,
**caractérisé en ce qu'**
un élément d'arrêt tel qu'une soupape d'arrêt ou un robinet d'arrêt est associé à chaque vérin hydraulique (14, 24).

9. Epandeur selon une ou plusieurs des revendications précédentes, selon lequel le côté avant du cadre comporte un timon,
**caractérisé en ce que**
le timon est un timon pliant (18, 31) et un vérin hydraulique (20, 36) est prévu entre le timon (18, 31) et le cadre (1).

10. Epandeur selon l'une quelconque des revendications précédentes,
**caractérisé en ce que**
le réservoir (9) est réalisé pour se trouver dans l'extension latérale au-dessus de la zone des roues de sustentation (12).

11. Epandeur selon une ou plusieurs des revendications précédentes,
**caractérisé en ce que**
les vérins hydrauliques (14, 24) associés aux différentes roues de sustentation (12) peuvent être actionnés pour soulever ou abaisser les bras (13, 23) pour que les roues de sustentation (12) avant et/ou arrière puissent prendre une position différente ou une position identique que les autres roues de sustentation (12).

12. Epandeur selon une ou plusieurs des revendications précédentes,
**caractérisé en ce qu'**
en cas de trajet en courbe ou de manoeuvre de retournement à l'extrémité du champ, on soulève les roues de sustentation (12) avant par rapport aux roues de sustentation arrière (12) ou on abaisse les roues de sustentation arrière (12) par rapport aux roues de sustentation avant (12).

13. Epandeur selon une ou plusieurs des revendications précédentes,
**caractérisé en ce que**
les vérins hydrauliques (14, 24) associés aux différentes roues de sustentation (12) se règlent à l'aide de moyens appropriés et/ou peuvent être sollicités de façon que les roues avant et/ou arrière (12) soient relevées ou abaissées complètement ou en partie pour régler l'équilibre pondéral entre les roues de sustentation avant et arrière (12) selon les conditions d'utilisation.

14. Epandeur selon une ou plusieurs des revendications précédentes,
**caractérisé en ce que**
les roues de sustentation (12) de chaque côté sont réglables séparément et différemment de chaque côté à l'aide de moyens appropriés pour leur réglage respectif en hauteur et/ ou par rapport au cadre (1).

15. Epandeur selon une ou plusieurs des revendications précédentes,
**caractérisé en ce qu'**
au moins certaines des roues de sustentation (12) sont montées de manière directionnelle sur le cadre (1).

16. Epandeur selon une ou plusieurs des revendications précédentes,
**caractérisé en ce que**
les roues de sustentation avant et/ou arrière (12) sont réglables l'une par rapport à l'autre avec des largeurs de voie différentes.

17. Epandeur selon une ou plusieurs des revendications précédentes,
**caractérisé en ce que**
la roue (12) d'un côté de l'épandeur peut être soulevée et/ou abaissée indépendamment de la roue (12) de l'autre côté de l'épandeur.

18. Epandeur selon une ou plusieurs des revendications précédentes,
**caractérisé en ce que**
les roues (12) d'un côté peuvent être soulevées et/ou abaissées indépendamment des roues (12) de l'autre côté.
